(19) Europäisches Patentamt
European Patent Office
Office européen des brevets

(11) Veröffentlichungsnummer: **0 198 435**
**A2**

(12) **EUROPÄISCHE PATENTANMELDUNG**

(21) Anmeldenummer: **86104970.8**

(51) Int. Cl.⁴: **B01D 53/36** , B01J 37/02

(22) Anmeldetag: **11.04.86**

(30) Priorität: **17.04.85 DE 3513726**

(43) Veröffentlichungstag der Anmeldung:
**22.10.86 Patentblatt 86/43**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Broecker, Franz Josef, Dr.**
**Schwanthalèr Allee 20**
**D-6700 Ludwigshafen(DE)**

(54) **Verfahren zur Herstellung von Katalysatoren für die Abgasentgiftung.**

(57) Die Anmeldung betrifft ein Verfahren zur Herstellung von Katalysatoren, insbesondere für die Motorabgasentgiftung, bei dem man die Aktivkomponenten sowie die Promotoren auf Trägermaterialien durch Aufdampfen im Ultrahochvakuum aufbringt. Als Trägermaterialien werden zweckmäßig netz-bzw. gewebeartige Trägermaterialien verwendet.

Die bedampften Katalysatorgewebe werden für den Einbau in den Reaktor zu "Katalysatorpaketen" zusammengefügt und die Formgebung der Katalysatorpakete den Strömungsverhältnissen im Reaktor angepaßt.

EP 0 198 435 A2

# Verfahren zur Herstellung von Katalysatoren für die Abgasentgiftung

Es sind bereits erhebliche Anstrengungen unternommen worden, vor allem im Hinblick auf die Autoabgasentgiftung, Katalysatoren mit niedrigen Druckverlusten, thermischer Stabilität und ausreichender Aktivität zu entwickeln (EP 34 179). Dazu verwendet man in jüngster Zeit vorzugsweise monolithische Träger, die unterschiedlich geformte Durchströmungskanäle besitzen. Die Herstellung dieser Trägermaterialien mit sogenannter "Wabenstruktur" ist sehr aufwendig. In der Patentschrift GB-PS 1 371 082 wird ein solches Verfahren zur Herstellung von Trägern mit Wabenstruktur beschrieben.

Verfahren zur Herstellung von "Monolithen" durch Extrudieren werden z.B. in US-PS 4 364 888 und US 4 333 896 u.a. beschrieben. Alle Beschreibungen zeigen, welch erheblicher technischer Aufwand zur Herstellung von "Monolithen" erforderlich ist. Neben der Herstellung der monolithischen Träger ist das Aufbringen der Aktivkomponenten ein weiteres Problem bei der Herstellung dieser Katalysatoren. Auch werden dazu technisch relativ aufwendige Methoden benutzt. So wird in DE-OS 2 256 195 ein Verfahren beschrieben, wonach der Träger zunächst mit einer inerten Oxidschicht belegt wird und danach durch Imprägnieren die Aktivkomponenten aufgebracht werden. In EP 75 124 wird ein Katalysator für die Verbrennung von in Abgasen alkoholbetriebener Verbrennungskraftmaschinen enthaltenen Schadstoffen beschrieben. Der Katalysator besteht aus einem Metallträger, einem darauf abgeschiedenen Überzug aus aktivem Aluminiumoxid und einer auf diesem Überzug abgeschiedenen Palladiummenge von 0,03 bis 3 Gew.%. Die Oxidschicht wird durch Tauchen des Trägers in eine Dispersion von aktivem Aluminiumoxid und anschließender Temperung bei erhöhter Temperatur (700°C) hergestellt. Auf diese Oxidschicht wird anschließend durch Tauchen in eine Palladiumsalzlösung das Edelmetall aufgetränkt und nach Trocknung und Reduktion bei 500°C der Katalysator erhalten.

In DE-OS 2 317 560 ist ein Katalysator beschrieben, der aus einem monolithischen Wabenkörper als Träger mit einer Grundschicht aus $Si_2O$ und/oder $Al_2O_3$ sowie einer oder mehrerer Deckschichten aus $SiO_2$, $TiO_2$, $ZrO_2$, $SnO_2$ und/oder $MnO_2$ besteht, wobei die Deckschichten durch Tränken mit Alkalioxiden und anschließender Hydrolyse dieser Verbindungen hergestellt werden. Schließlich wird auf diese Deckschicht die Aktivkomponente durch Imprägnieren bzw. Tränken aufgebracht. Als Aktivkomponenten werden 0,2 Gew.% Pt-Metalle sowie Cu, Cr und Fe angegeben. Danach ist die Herstellung monolithischer Abgaskatalysatoren mit vielen Einzelschritten und aufwendigen Tränk-und Kalzinationsverfahren verbunden.

Es war deshalb die Aufgabe gestellt, ein Verfahren zur Herstellung von Katalysatoren zu entwickeln, welches wesentlich einfacher zu handhaben ist und gleichzeitig, insbesondere bei den Autoabgaskatalysatoren eine Verringerung des Edelmetallgehalts der Katalysatoren ermöglicht.

Es wurde nun gefunden, daß man die oben beschriebenen Nachteile der bekannten Verfahren vermeidet, wenn man bei der Herstellung von Katalysatoren für die Abgasentgiftung die Aktivkomponenten und die Promotoren im Vakuum verdampft und auf netz-bzw. gewebeartige Trägermaterialien durch Aufdampfen im Vakuum aufbringt.

Zweckmäßigerweise werden die mit dem Katalysatormetall bedampften Gewebe für den Einbau in den Reaktor zu Katalysatorpaketen zusammengefügt und die Formgebung der Katalysatorpakete den Strömungsverhältnissen im Reaktor angepaßt.

Als Gewebe kann man z.B. metallische Drahtgewebe verwenden oder Gewebe aus anorganischen Materialien wie $Al_2O_3$ bzw. $SiO_2$ oder Kombinationen beider. Man kann aber auch Gewebe aus Kohlefasern oder Gewebe aus Kunststoffen verwenden.

Nach dem erfindungsgemäßen Verfahren wird die Katalysatorkonfektionierung wesentlich vereinfacht und durch die Möglichkeit der Herstellung sehr dünner Schichten der Gehalt an Aktivkomponenten aus Edelmetallen z.B. Platin erheblich reduziert.

Man kann als Trägermaterialien Drahtgewebe aus verschiedenen webbaren Metalldrähten wie Eisen, Federstahl, Kupfer, Messing, Phosphorbronze, Reinnickel, Monel, Aluminium, Silber, Neusilber, Nickel, Chromnickel, Chromstahl, nichtrostende, säurebeständige und hochhitzebeständige Chromnickelstähle sowie Titan verwenden. Man kann auch Gewebe aus anorganischen Materialien, wie $Al_2O_3$ und/oder $SiO_2$ verwenden. Auch synthetische Drähte aus Kunststoffen wie Polyamide, Polyester, Polyvinyle, Polyethylen, Polypropylen, Polytetrafluorethylen u.a. lassen sich zu Geweben verarbeiten und als Träger einsetzen. Für die Autoabgasentgiftung kommen vor allem nichtrostende und hochhitzebeständige Stähle sowie Gewebe aus hitzebeständigen anorganischen Fasern wie beispielsweise Keramikfasern in Betracht. Es lassen sich Gewebe unterschiedlicher Webart, wie glatte Gewebe, Körpergewebe, Tressengewebe, Fünfschaft-Atlas-Gewebe und andere Spezialbindungsgewebe einsetzen. Auch Formlinge aus Drahtgestrick wie beispielsweise Raschigringe können eingesetzt werden.

Die Gewebe kann man vorteilhaft mittels einer Vakuumaufdampftechnik mit "Dünnen Schichten" von Aktivkomponenten und Promotoren bzw. Stabilisatoren beschichten. Als "Dünne Schichten" werden Beläge im Dickenbereich zwischen wenigen Angström und maximal 1 µm bezeichnet.

Als Vakuumaufdampftechniken können verschiedene Verfahren z.B. die thermische Verdampfung, die Flash-Verdampfung, die Kathodenzerstäubung sowie die Kombination von thermischer Verdampfung und Kathodenzerstäubung eingesetzt werden. Die thermische Verdampfung kann durch direkte oder indirekte elektrische Beheizung erfolgen. Auch die Elektronenstrahl-Verdampfung kann eingesetzt werden. Dabei wird die zu verdampfende Substanz in einem wassergekühlten Tiegel mit einem Elektronenstrahl oberflächlich so stark erhitzt, daß selbst hochschmelzende Metalle und Dielektrika verdampft werden können. Gezielte Zusätze geeigneter Mengen reaktiver Gase zum Restgas bewirken beim Schichtaufbau chemische Reaktionen, was z.B. zur Bildung von Oxiden, Nitriden oder Karbiden führen kann.

Mit diesen Methoden kann man den Katalysator gezielt mit Verbinungen, die als Promotoren und Stabilisatoren wirken, in optimaler Weise dotieren. Auch einfach aufgebaute, stabile Verbindungen können ohne nennenswerte Zersetzung direkt verdampft werden. Legierungen werden vorzugsweise durch Flash-Verdampfung aufgebracht.

Nach dem erfindungsgemäßen Verfahren kann man Gewebe in einer Vakuumbedampfungsanlage diskontinuierlich oder kontinuierlich bedampfen, z.B. indem man die aufzubringende Aktivkomponente, beispielsweise ein Edelmetall, im Vakuum bei $10^{-2}$ bis $10^{-10}$, vorzugsweise $10^{-4}$ bis $10^{-8}$ Torr, mittels eines Elektronenstrahls so stark erhitzt, daß das Metall aus dem wassergekühlten Tiegel heraus verdampft und sich auf dem Träger niederschlägt. Das Trägergewebe wird zweckmäßig so angeordnet, daß ein möglichst großer Teil des Dampfstroms auf dem Träger kondensiert. Durch eine eingebaute Wickelmaschine können die Gewebe kontinuierlich beschichtet werden. Drahtgestricke, wie z.B. Raschigringe aus feinen Drähten, werden in einem Drehtrommelkorb für Schüttgut gefüllt und darin bedampft.

Im Gegensatz zu den bisherigen Anwendungen der Aufdampftechnik in der Optik-und Elektroindustrie bei denen man hohe Reinheit der Träger-und Aufdampfmaterialien, eine bestimmte Kondensationstemperatur am Träger und eine bestimmte Aufdampfrate einstellen muß, da Fehlstellen in Aufdampffilmen die optischen, elektrischen und magnetischen Eigenschaften stark beeinflussen und hierfür ein erheblicher Aufwand zur reproduzierbaren Herstellung solcher Filme erforderlich ist, geht es bei dem erfindungsgemäßen Verfahren zur Herstellung von Katalysatoren darum, möglichst ungeordnete und gestörte polykristalline Schichten herzustellen. Deshalb sind normalerweise keine besonders guten Vakuumbedingungen erforderlich. Ferner versucht man durch wechselweises Aufdampfen von Aktivkomponenten und strukturellen Promotoren die Aktivkomponenten feinkristallin zu erhalten.

Man kann bei dem erfindungsgemäßen Verfahren den Katalysator systematisch aufbauen, z.B. in einer Bedampfungsanlage mit 4-Loch-Tiegel, in dem vier verschiedene Materialien wechselweise verdampft werden können. Man kann z.B. zunächst den Träger mit einer Oxidschicht bedampfen und darauf die Aktivkomponenten aufbringen. Auch lassen sich Aktivkomponenten und Promotoren in mehreren Wechselschichten herstellen. Durch Einlaß eines reaktiven Gases in den Rezipienten können Promotorschichten aus Oxiden oder anderen Verbindungen hergestellt werden. Auch Tempervorgänge können zwischengeschaltet werden. Man hat so die Möglichkeit, all die Einzelschritte, die zum Aufbau eines komplexen Katalysatorsystems notwendig sind, in einem Arbeitsgang durchzuführen.

Die so beschichteten Gewebe, d.h. das eigentliche Katalysatormaterial, kann anschließend zu "Katalysatorzellen" geformt werden. Eine sehr einfache Katalysatorzelle für einen Rohrreaktor besteht aus kreisförmig ausgestanzten Katalysatorgeweben, die man mit Abstandsringen übereinander stapelt. Die einzelnen Katalysatornetze können auch in Einsatzrahmen gefaßt werden und zu einer beliebigen zylindrischen Baueinheit, "Katalysatorzelle", zusammengefügt werden. Man kann dann diese Katalysatorzelle komplett in einen Rohrreaktor einbauen (Abb.1). Diese Katalysatoranordnung bewirkt eine besonders gute Reaktionsführung, da sich eine gleichmäßige Strömung ausbilden kann. Die Katalysatorgewebe können aber auch wie Wellpappe gerollt oder andersartig geformt und zu Katalysatorzellen verarbeitet werden. Auch eine Kombination mit Filtern ist möglich. Bei der Entgiftung von Autoabgasen kann die Katalysatorzelle so geformt werden, daß gleichzeitig eine Schalldämpfung ermöglicht wird. Die Möglichkeit zur Herstellung beliebig geformter Katalysatorzellen führt dazu, daß man auch für Motorräder, Rasenmäher und andere mit Benzin betriebenen Gerätschaften Abgasreinigungen vornehmen kann, in dem man die Katalysatorzellen in das vorhandene Abgassystem einsetzt. Aber auch für Industrieabgase ist der Einbau solcher Katalysatorzellen wegen des geringen Druckverlustes vorteilhaft. Dabei lassen sich die Katalysatorzellen ohne Schwierigkeiten mit Abgasfiltern kombinieren.

Zur Reinigung von Autoabgasen werden bevorzugt "Dreiweg-Katalysatoren" eingesetzt. Diese Katalysatoren oxydieren CO und Kohlenwasserstoffe und reduzieren $NO_x$ zu Stickstoff.

Die Aktivkomponenten für diese Umwandlungsreaktionen sind unterschiedlich. Edelmetalle wie Pt, Pd, Rh und Ir haben sich für die Oxidation von CO und Kohlenwasserstoffen besonders bewährt.

Für die reduktive Umwandlung von $NO_x$ nimmt man folgende Reaktionsschritte an:

1) $2\ NO + 5\ H_2 \longrightarrow 2\ NH_3 + 2\ H_2O$

2) $2\ NH_3 \longrightarrow N_2 + 3\ H_2$

Die Reduktion vonn NO zu $NH_3$ wird von Aktivkomponenten, wie Pt, Pd und Cu, besonders gut katalysiert. Die Ammoniakzersetzung zu Stickstoff und Wasserstoff wird von diesen Elementen nicht ausreichend katalysiert. Hierfür eignet sich besonders gut Nickel als Katalysator.

Für die Reduktion von $NO_x$ zu Stickstoff sind z.B. Kombinationen von Edelmetallen wie Pt, Pd, Rh und Ir mit Nickel und/oder Kupfer geeignet.

Bei den bekannten Motorabgas-Katalysatoren werden die katalytisch aktiven Substanzen stets zusammen auf einem meist monolithische Träger aufgebracht. Da das Aufbringen der Aktivkomponenten durch Tränken mit Lösungen erfolgt, wird ein Teil der Einzelkomponenten durch andere überdeckt, so daß ihre volle Wirksamkeit, die nur an der Katalysatorgrenzfläche auftritt, eingeschränkt wird.

Durch das erfindungsgemäße Verfahren kann man diese Überdeckungen der Aktivkomponenten vermeiden. Dadurch erreicht man mit geringsten Mengen an Aktivkomponenten optimale Aktivitäten. Eine besonders vorteilhafte Ausführungsform besteht darin, daß man Katalysatorpakete zusammenstellt, die dem Reaktionsschema entsprechen. So kann man beispielsweise Katalysatornetze, die mit Pt, Pd, Rh oder Ir bedampft werden, mit solchen, die Nickel als Aktivkomponente tragen, in diesen Katalysatorpaketen kombinieren. Hierfür bringt man die Aktivkomponenten zunächst in feinster Verteilung auf getrennten und meist vorbehandelten Trägernetzen auf und stellt anschließend daraus durch optimale Kombination der einzelnen Katalysatornetze ein Katalysatornetzpaket zusammen. Eine weitere Methode besteht darin, daß man die Aktivkomponenten nebeneinander auf einem Träger aufdampft, in dem man Masken in den Dampfstrahl einführt.

Das erfindungsgemäße Verfahren eignet sich ferner dazu, Katalysatoren herzustellen, die direkt im Verbrennungsraum des Motors, z.B. auf dem Kolben und/oder über dem Kolben im Zylinder angebracht werden. Für solche Katalysatoren eignen sich hochhitzebeständige Edelstahlnetze bzw. -folien besonders gut, da sie direkt mit dem Motormaterial im Verbrennungsraum verschweißt bzw. verbunden werden können. Als geeignete Materialien für die Trägernetze bzw. -folien kommen insbesondere Edelstahllegierungen, die Cr und Al, Cr, Mn und Al, Cr und Si, Cr und Ti, Cr, Mo und V, Cr, Mn, Mo, V, Nb und N, Cr, Ni und Si, Cr, Ni, Al und Ti als Legierungsbestandteile enthalten. Besonders gute Ergebnisse erhält man überraschenderweise mit Edelstahlgeweben aus Chrom und Aluminium enthaltenden hitzebeständigen Legierungen, wenn man diese vor dem Bedampfen 1 bis 15, vorzugsweise 2 bis 8 Stunden bei 900 bis 1000°C erhitzt. Beschichtet man dieses vorgetemperte Material anschließend durch Bedampfung, so erhält man hochaktive Katalysatorgewebe. Vorteilhaft ist auch die Herstellung von Grundschichten auf dem Trägermaterial aus Oxiden bzw. Oxidgemischen. Diese Grundschichten können vorzugsweise aus Oxiden folgender Metalle bestehen: B, Al, Ba, Sr, Ca, Mg, Be, Si, Zn, Sn, Mn, Cr, V, W, Mo, Ti, Zr, Sc, Y, La, Ce und anderen Seltenen Erdmetallen. Diese Oxidschichten können durch direktes Aufdampfen der Oxide oder durch Aufdampfen der Metalle mit anschließender Oxidation hergestellt werden. Durch Tempern können auch oxidische Verbindungen, wie z.B. Spinelle auf der Trägeroberfläche erzeugt werden.

Durch sogenannte reaktive Verdampfung in reaktionsfähiger Restgasatmosphäre kann man die Trägeroberfläche auch mit Verbindungen, wie Nitriden oder Carbiden, beschichten.

Auf diese so stabilisierten Trägeroberflächen kann man die Aktivkomponenten aufdampfen. Neben den Edelmetallen Pt, Pd, Rh und Ir kommen die Metalle Ni, Co, Fe, Cr und Cu in Frage.

Durch den Einbau der Katalysatoren direkt in den Verbrennungsraum kann man eine vollständige Verbrennung mit einem extrem mageren Kraftstoffgemisch bewirken. Dadurch wird die Bildung aller Schadstoffe minimiert und eine optimale Abgasreinigung erzielt. Zum Einbau in den Verbrennungsraum eignen sich besonders die Edelmetalle Pt, Pd, Rh und Ir. Diese werden auf die hitzebeständigen Metallträger, die vorzugsweise mit einer entsprechenden oxidischen Grundschicht ausgestattet sind, aufgedampft.

Die Herstellung der erfindungsgemäßen Katalysatoren durch Aufdampfen besitzt den großen Vorteil, daß man bereits mit Schichten von wenigen zehntel Nanometern Dicke maximale Aktivität erzielt. Dadurch wird der Edelmetallgehalt der Katalysatoren im Vergleich zu Tränkkatalysatoren wesentlich erniedrigt. Für die Autoabgaskatalysatoren ergeben sich Edelmetallgehalte von 0,005 bis 0,8 g Edelmetall/l Kat, vorzugsweise 0,02 bis 0,5 g Edelmetall/l Kat.

Die folgenden Beispiele zeigen, daß die erfindungsgemäßen Katalysatoren aufgrund der feinen Verteilung der Aktivkomponenten eine bessere Aktivität als Monolith und andere Tränkkatalysatoren besitzen.

Beispiel 1

In einer Vakuumbedampfungsapparatur wird ein Edelstahlgewebe bei einem Vakuum von 5 • $10^{-7}$ Torr mit einer 50 Å dicken Platinschicht bedampft. Das Platin befindet sich in einem gekühlten Kupfertiegel und wird mittels eines Elektronenstrahls verdampft. Aus dem Gewebe werden dann runde Scheiben ausgestanzt und in der Mitte des in Abb. 1 dargestellten Rohrreaktors (1) eingebaut. Zwischen die einzelnen Netze (2) werden jeweils Abstandsringe (3) gelegt. Das so erhaltene Netzpaket (4) aus 27 Netzen beansprucht ein Volumen von 4,9 $cm^3$ im Reaktor.

Die Katalysatornetze werden auf ihre Brauchbarkeit zur Oxydation von CO mit einem Abgas mit 930 ppm CO in Luft bei einer Raumgeschwindigkeit von 10.968 [$h^{-1}$], bezogen auf den leeren Reaktor, und 25°C, geprüft. Dazu wird der Reaktor in ein Salzbad getaucht und so von außen isotherm beheizt. Die Katalysatoraktivität wird charakterisiert durch die Aktivität $A_i$, definiert als der natürliche Logorithmus des Konzentrationsverhältnisses der Komponente i vor und nach dem Katalysator:

$$A_i = \ln \frac{(X_i)\ \text{Eingang}}{(X_i)\ \text{Ausgang}}$$

Der erfindungsgemäße Katalysator wird mit einem auf dem Markt erhältlichen "Monolith-Katalysator" für die Autoabgasentgiftung verglichen. Für verschiedene Salzbadtemperaturen sind die Ergebnisse in der Tabelle 1 angegeben. Die Raumgeschwindigkeit beträgt bei allen Versuchen konstant 10.968 [$h^{-1}$], bezogen auf leeren Reaktor und 25°C.

Tabelle 1

| Katalysator | Aktivität $A_i$ beim CO-Test 250°C | 350°C | 450°C |
|---|---|---|---|
| Erfindungsgemäßer Kat. | 6,84 | 7,53 | 8,44 |
| Monolith-Katalysator | 5,74 | 6,14 | 6,84 |

Aus den Messungen ist ersichtlich, daß der erfindungsgemäße Katalysator bereits bei einer um 200°C niedrigeren Temperatur von 250°C die Aktivität besitzt, die der "Monolith-Katalysator" erst bei 450°C zeigt.

Beispiel 2

Wie im Beispiel 1 beschrieben, wird ein Edelstahlnetz mit einer 500 Å dicken Platinschicht und anschließend mit 50 Å Rhodium bedampft. Aus den Netzscheiben wird ein Netzpaket, wie im Beispiel 1 beschrieben, hergestellt und dieses in den Reaktor eingebaut. Zur Untersuchung der Aktivität bei der Entfernung von Kohlenwasserstoffen aus Abgasen wird ein Abgas aus 168 ppm Propan und Luft mit einer Raumgeschwindigkeit von 11.000 $h^{-1}$ bei verschiedenen Temperaturen über den Katalysator geleitet. Zum Vergleich werden die Ergebnisse mit dem in Beispiel 1 geprüften "Monolith-Katalysator" und einem Tränkkatalysator mit 0,05 % Pt auf $\alpha$-$Al_2O_3$ gegenübergestellt. Tabelle 2 gibt die Ergebnisse des Aktivitätstests wieder.

Tabelle 2

| Katalysator | Aktivität $A_i$ beim Propantest 250°C | 350°C | 450°C |
|---|---|---|---|
| Erfindungsgemäßer Kat. | 0,21 | 0,74 | 3,51 |
| Monolith-Katalysator | 0,11 | 0,33 | 2,12 |
| Tränkkatalysator 0,05 % Pt auf $Al_2O_3$ | 0,10 | 0,34 | 1,59 |

Auch bei diesem Test zeigt der erfindungsgemäße Katalysator eine wesentlich höhere Aktivität als die Vergleichskatalysatoren.

Beispiel 3

Wie in Beispiel 1 beschrieben, wird ein Edelstahlgewebe erst mit 250 Å Platin und anschließend mit 250 Å Rhodium bedampft. Daraus wird ein Katalysatornetzpaket hergestellt und letzteres im Vergleich zum Monolith-Katalysator bei gleichen Katalysatorvolumina getestet. Für den Aktivitätstest wird ein Abgas, bestehend aus 994 ppm Kohlenmonoxid, 193 ppm Propan und Luft, mit einer konstanten Raumgeschwindigkeit von 10.000 [$h^{-1}$], bezogen auf leeren Raum, und 25°C, bei verschiedenen Temperaturen über den Katalysator geleitet. Die Ergebnisse sind in Tabelle 3 zusammengestellt.

Tabelle 3

| Katalysator | Aktivität $A_i$ für CO 250° C | 350° C | 450° C | Aktivität $A_i$ für $C_3H_8$ 250° C | 350° C | 450° C |
|---|---|---|---|---|---|---|
| Erfindungsgem.Kat. 250 Å; 250 Å Rh | 6,9 | 7,6 | 8,5 | 0,27 | 3,47 | 3,70 |
| Monolith-Katalysator | 5,7 | 6,1 | 6,5 | 0,13 | 0,37 | 2,23 |

Bei diesem Beispiel wird sowohl Kohlenmonoxid als auch Propan weitgehend aus dem Gas durch Oxidation entfernt. Auch in diesem Beispiel zeigt sich die deutliche Überlegenheit des erfindungsgemäß hergestellten Katalysators.

Beispiel 4

Das Edelstahlgewebe (Werkstoff-Nr. 1.4767) wird 5 h bei 900°C an der Luft erhitzt. Nach dem Abkühlen wird das Gewebe, wie in Beispiel 1 dargelegt, zunächst mit 100 Å Platin und anschließend mit 10 Å Rhodium bedampft. Der so hergestellte Katalysator wird, wie in Beispiel 3 beschrieben, einem Aktivitätstest unterzogen. Dabei zeigt sich, daß die 994 ppm Kohlenmonoxid bereits bei 250°C quantitativ umgesetzt werden. Für das Propan ergibt sich bei 250°C ein Umsatz von 19,7 %, bei 350°C von 52,3 % und bei 450°C ein quantitativer Umsatz, d.h. im Abgas ist kein Propan mehr nachzuweisen.

## Ansprüche

1. Verfahren zur Herstellung von Katalysatoren für die Abgasentgiftung, dadurch gekennzeichnet, daß man die Aktivkomponenten und die Promotoren im Vakuum verdampft und auf netz-bzw. gewebeartige Trägermaterialien durch Aufdampfen im Vakuum aufbringt.

2. Verfahren nach Anspruch 1, dadurch gekennzeichnet, daß man die mit dem Katalysatormetall bedampften Gewebe für den Einbau in den Reaktor zu Katalysatorpaketen zusammenfügt und die Formgebung der Katalysatorpakete den Strömungsverhältnissen im Reaktor anpaßt.

3. Verfahren nach Anspruch 1 und 2, dadurch gekennzeichnet, daß man als Gewebe metallische Drahtgewebe verwendet.

4. Verfahren nach Anspruch 1 und 2, dadurch gekennzeichnet, daß man Gewebe aus anorganischen Materialien verwendet.

5. Verfahren nach Anspruch 1 und 2, dadurch gekennzeichnet, daß man Gewebe aus Kohlefasern verwendet.

6. Verfahren nach Anspruch 1 und 2, dadurch gekennzeichnet, daß man Gewebe aus Kunststoffgewebe verwendet.

7. Verfahren nach Anspruch 1 bis 6, dadurch gekennzeichnet, daß man das netz-bzw. gewebeartige Trägermaterial zunächst mit einem oxydierbaren Metall bedampft, das aufgedampfte Metall mit Sauerstoff und/oder Luft oxydiert und danach auf die Oxidschicht die Aktivkomponente aufdampft.

8. Verfahren nach Anspruch 1 bis 7, dadurch gekennzeichnet, daß man durch Aufdampfen verschiedener Metalle mehrere Schichten unterschiedlicher Dicke erzeugt.

9. Verfahren nach Anspruch 1 bis 8, dadurch gekennzeichnet, daß man die Schichten durch Tempern bei erhöhter Temperatur in Legierungen oder Verbindungen überführt.

10. Verfahren nach Anspruch 1 bis 9, dadurch gekennzeichnet, daß man das gewebeartige Trägermaterial vor dem Aufdampfen der Aktivkomponenten mit einer hitzebeständigen Verbindung beschichtet, die mit dem Gewebematerial nicht reagiert.

11. Verfahren zur Herstellung von Dreiwegkatalysatoren für die Abgasentgiftung nach Anspruch 1 bis 10, dadurch gekennzeichnet, daß man die Aktivkomponenten für die einzelnen Reaktionsschritte in feinster Verteilung auf getrennten und gegebenenfalls vorbehandelten Trägernetzen aufbringt und dann daraus durch optimale Kombination der einzelnen, verschiedene Komponenten enthaltenden Netze ein Katalysatornetzpaket zusammenstellt.

12. Verwendung der nach Anspruch 1 bis 11 erhaltenen Katalysatorgewebe zur Motor-Abgasentgiftung.

13. Verfahren zur Herstellung von Katalysatoren für die Motorabgasentgiftung nach Anspruch 1 bis 11, dadurch gekennzeichnet, daß man hochhitzebeständiges Edelstahlgewebe bzw. -folie im Vakuum mit Aktivkomponenten bedampft und diese Katalysatoren direkt im Verbrennungsraum des Motors anbringt.

14. Verfahren nach Anspruch 13, dadurch gekennzeichnet, daß man das Trägermaterial vor dem Aufdampfen der Aktivkomponenten mit einer Oxidschicht und/oder einer durch Temperung entstehenden Verbindung beschichtet.

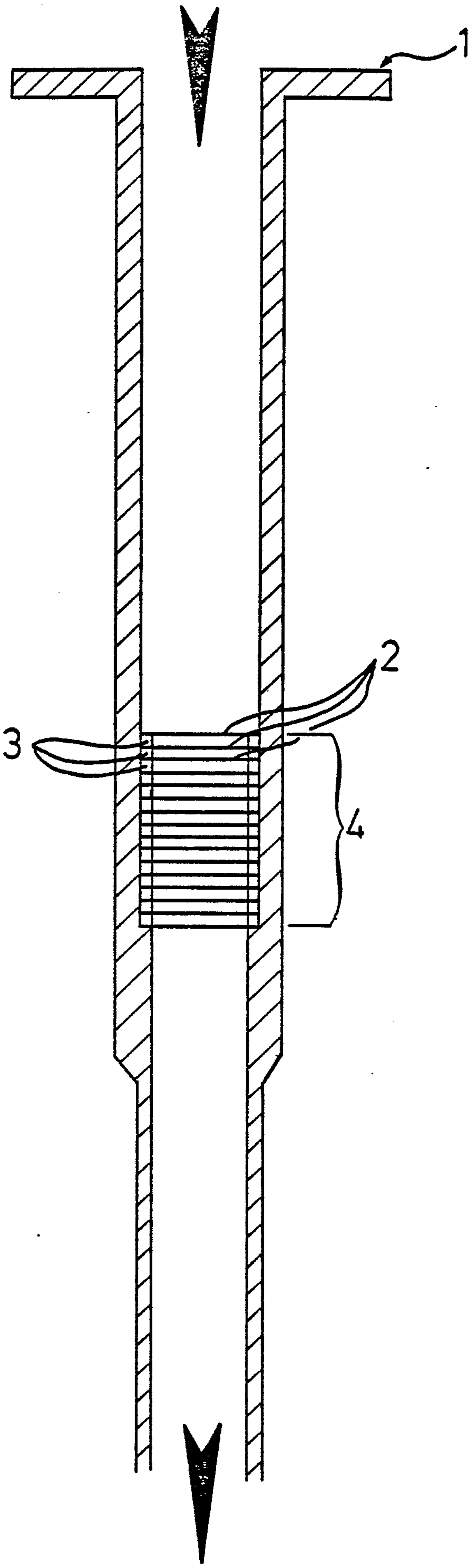
1
2
3
4